# EUROPEAN PATENT SPECIFICATION

(11) **EP 2 141 859 B1**
(45) Date of publication and mention of the grant of the patent: **29.08.2012**
(21) Application number: 08290638.9
(22) Date of filing: 30.06.2008
(51) Int. Cl.: H04L 12/24, H04L 12/66, H04L 29/06, H04M 7/12

(54) **Shutting down a media gateway controller**
Abschalten einer Medien-Gateway-Steuerung
Fermeture d'un contrôleur de passerelle de média

(43) Date of publication of application: 06.01.2010
(73) Proprietor: Alcatel Lucent, 75007 Paris (FR)
(72) Inventor: Schmidt, Hartmut, 71717 Beilstein (DE)
(74) Representative: Wetzel, Emmanuelle

(56) References cited:
- EP-A- 1 727 309
- EP-A1- 1 777 893
- US-B1- 7 248 565
- US-B1- 7 286 545

## Description

The invention relates to telecommunications, in particular to a method for shutting down a media gateway controller, for example for the purpose of maintenance of the media gateway controller (e.g. repair or hardware and/or software upgrade) after the media gateway has been shut down.

Media gateways (MGWs) are used for connecting two or more telecommunication networks. Such telecommunication networks may be of the same type, e.g. two PSTNs (Public Switched Telephone Network) or may be of different type, e.g. two different network types selected from a PSTN, NGN (Next Generation Network), 2G radio access network, 2.5G radio access network and 3G radio access network. MGWs are often used for interfacing a PSTN and a NGN, thereby converting TDM voice channels to VoIP and vice versa. Such MGWs interfacing a PSTN and a NGN may also have interfaces to two or more PSTNs.

When interfacing with a PSTN, such MGW is connected to a switch of a peering network via a trunk group comprising a plurality of trunks. The trunks of the trunk group form communication paths between the MGW and the switch of the PSTN and are used to carry telephone calls.

E.g., such trunk group between an MGW and a switch may be realized by a bidirectional E1 link (2.048 Mbps) split in 32 timeslots of 64 kbps each or by a bidirectional T1 link (1.544 Mbps) split in 24 timeslots of 64 kbps each. In this case each timeslot may correspond to a trunk and can carry one telephone call. Also, a trunk group may be formed by a plurality of E1 links or T1 links, wherein e.g. an E1 link or T1 link corresponds to a trunk. Besides PDH (plesiochronous digital hierarchy) interfaces like E1, also SDH (synchronous digital hierarchy) and SONET (synchronous optical networking) interfaces like STM-1 may be used for realizing a trunk group.

For controlling an MGW, a media gateway controller (MGC) is used. It should be noted that in the application the term "media gateway controller" also comprises the synonymous term "softswitch". Typically, one MGW is controlled by one MGC. An MGC often controls a plurality of MGWs.

The MGC itself is controlled via signaling information (i.e. call control information). For controlling the MGW, the MGC receives signaling information (i.e. call control information) from the peering network. Such signaling information may be signaling information according to the SS7 (Signaling System 7) telephone signaling protocol, in particular ISUP (ISDN user part) messages.

The trunks of a trunk group have a common signaling relationship. When setting up a call, the MGC receives an ISUP message containing a CIC (circuit identification code). The CIC (e.g. CIC = 17) identifies a particular trunk within the trunk group, with the particular trunk intended to carry the call. The ISUP message also contains a destination point code which corresponds to the destination address of the ISUP message. Thus, each trunk of a trunk group is controlled via signaling information originated from the same originating signaling point code and addressed to the same destination point code, i.e. the trunks of a common trunk group are associated with the same originating and destination point codes. There may be also a second trunk group (or even more trunk groups) between the peering switch and the MGW. However, typically in this case the point codes are not identically, e.g. the destination point code is different.

Trunks and trunks groups are also discussed in the document "Representing trunk groups in tel/sip Uniform Resource Identifiers (URIs)" from V. Gurbani, and C. Jennings, February 20, 2006, IPTEL WG, Internet-Draft (http://www.ietf.org/proceedings/06mar/IDs/draft-ietf-iptel-trunk-group-07.txt).

Section 2 of this document related to trunks and trunk groups is hereby incorporated by reference.

When upgrading an MGC with new hardware and/or software or repairing an MGC, typically the system has to be taken out of service. This leads to a service interruption for all calls which are under control by the particular MGC. These calls are dropped. Such loss of calls and the service outage during maintenance results in economic damages. The outage may also affect the setup of new calls. The network notices the service interruption and routes calls across alternative circuits, e.g. of other operators.

For overcoming the problem of loss of control of an MGW when the responsible MGC is shut down, redundant systems may be used. In a redundant configuration, the control of an MGW is transferred to a backup MGC in case the primary MGC is out of service (please note that typically only parts of such MGC have a backup functionality, other parts are active). The primary MGC and the secondary MGC may be located at different geographical locations. Such geographically redundant configuration prevents that both the primary MGC and the secondary MGC are out of service in case of a geographically limited incident. However, in most MGC implementations the calls are still dropped when the MGC is shut down, even in a redundant configuration. Some MGC implementations allow the transfer of stable calls. The time to switch the control of calls from the primary MGC to the backup MGC is dependent on the size of the network. In a huge network configuration, the service outage due to takeover processing in the backup MGC is unacceptable (many 10s of seconds, up to minutes of outage). Moreover, when taking over the control of stable calls to the backup MGC, inconsistent or corrupted data from the primary MGC may be used. This may lead to a fault in the backup MGC. Thus, a fault that brought down the primary MGC can lead to a fault in the backup MGC.

The takeover of control of calls can be realized by storing call related context in the MGW. The backup MGC reads out the call related context and rebuilds the calls on the backup MGC. This may take a lot of time as discussed above. In addition, such approach bears the risk of taking over corrupted call contexts from the primary MGC.

Hence, it is an object of the present invention to provide a method for shutting down an MGC which overcomes said drawbacks, in particular which prevents from dropping of all calls on a trunk group and reduces the service outage due to shut-down of the MGC. Such network provides further advantages independent from the aimed advantages in connection with shutting down a MGC. A further object of the invention is to provide a telecommunication network comprising an MGC, with the network in particular overcoming said drawbacks when shutting down the MGC. Still another object of the invention is to provide an MGC for such telecommunication network.

These objects are achieved by the method, the telecommunication network and the MGC according to the independent claims.

US7286545 relates to a service broker capable of dynamically provisioning media gateways, gateway controllers, and call servers when adding one or more of these elements to the network, or reconfiguring the network when an element fails or to balance loads. Based on defined guidelines or mles, the service broker can select gateway controllers for media gateways, call servers for gateway controllers, and backup elements for any of the above.

The EP application EP1727309 describes methods and an apparatus for improving the availability of voice services controlled via IP signaling links provisioned over converged ATM and Ethernet converged network infrastructure.

EP1777893 describes a method for implementing dual-homing including the step of setting each one of any two core control equipment as a standby for each other. The invention is based on the idea of splitting the control of a trunk group from a peering network (e.g. a PSTN) between two or more MGC, i.e. control of the first portion of the trunk group is assigned to the first media gateway controller and control of the second portion of the trunk group is assigned to the second media gateway controller. Preferably, the first portion and the second portion of the trunk group may have the same size. The two or more MGC may be e.g. geographical redundant MGCs.

In case of a plurality of trunk groups from a peering network, the control of each of the trunks groups may be split, e.g. in such a way that two halves of each trunk group are assigned to two (e.g. geographical redundant) MGC or in such a way that two halves of the trunk groups as a whole are assigned to two (e.g. geographredundant) MGCs. In such case, every MGC may control about 50 % of the trunk group resources (trunk group capacity).

This idea prevents from call cuts. The impact of planned (e.g. planned shutdown of an MGC) or unplanned (e.g. crash of an MGC) service outage is limited to just a portion of the trunks of a trunk group, e.g. to just half of the trunks of a trunk group. Thus, one MGC may be set out of service without effecting control of the whole trunk group. In particular, this allows shutting down an MGC without dropping all calls on the trunk group. Moreover, in case of an MGC crash (or disaster), only 50 % of all trunks of the trunk group are affected. In addition, splitting of the control of trunk groups increases the probability that an MGC can use only its "own" trunks for terminating traffic without the need to involve a second MGC.

A first aspect of the invention relates to a method for shutting down an MGC (= first MGC). The first MGC may be subjected to maintenance after the first media gateway is shut down (e.g. software upgrade or hardware repair, replacement or upgrade).

A first MGW is connected to a peering switch (e.g. in a peering PSTN) via a first portion of a trunk group and a second MGW is connected to the peering switch via a second portion of the trunk group. Normally, such trunks of the trunk group have a common signaling relationship.

Please note that more than two MGWs may be used. In this case one may group the MGWs, e.g. in two groups, which are associated to different MGCs, e.g. to two different MGCs.

The first and second MGWs may be physical MGWs or virtual media gateways (vTGWs), typically in the same media gateway.

As discussed above, control of the first portion of the trunk group is assigned to the first media gateway controller and control of the second portion of the trunk group is assigned to a second media gateway controller.

According to the method, the first media gateway controller is shut down and control of the first portion of the trunk group is passed from the first MGC to the second MGC.

This method allows shutting down the fist MGC without affecting all calls of the trunk group. Moreover, the second MGC has still control over the second portion of the trunk group so that new calls can be set up via the second portion of the trunk group (even if the second MGC has not gained the control over the first portion of the trunk group). When the second MGCs has gained control also over the second portion of the trunk group (after passing the control of the trunk group from the first MGC to the second MGC), the whole trunk group is available for communication.

Preferably, instead of sending signaling information to different MGC point codes, signaling information is sent to a common signaling point code. The first and second MGCs preferably have the same signaling point code and thus both MGCs look like a single instance from the signaling network perspective. Both MGCs may be connected via a communication link, in particular for forwarding signaling information (from the first MGC to the second MGC and optionally also from the second MGC to the first MGC). In case both MGCs have the same signaling point code, signaling information received at the first MGC and related to a particular trunk of the trunk group which is controlled by the second MGC may be forwarded from the first MGC via the communication link to the second MGC. Instead of using the same point code for the first and second MGCs, two point codes for the MGCs may be used. In this case the traffic may be routed across a STP (signaling transfer point). The STP uses a so called "alias point code", which the STP assigns to one MGC. In case the MGC is out of service, the alias point code is assigned to the other MGC. For this purpose, the STP may have a SS7 connection to one MGC and a SS7 connection to the other MGC. Both connections are formed to a so called "combined linkset".

Preferably, some time before the first MGC is taken out of service (e.g. for an upgrade or repair), the operator prevents that new calls are setup on the first portion of the trunk group controlled by the first media gateway controller. This may be accomplished by issuing a "wait traffic clear" command to the first MGC, which prevents the first MGC from accepting new call setup requests. The first MGC uses the "wait traffic clear" indicator which means that it will not accept any new calls. However, preferably, the first MGC still continues to process already existing calls.

Advantageously, when it is prevented to setup new calls on the first portion of the trunk group (e.g. by sending a "wait traffic clear" command), new call setup requests are exclusively executed by the second MGC. Therefore, preferably, new requests to setup calls which are received at the first media gateway controller are forwarded to the second gateway controller. Such forwarding of requests may be accomplished via a SS7 link between both MGCs (e.g. SS7 over E1 or SS7 over IP) or via an M2PA link between both MGCs.

After a while, most of the calls on the first MGC are completed. When the number of remaining calls on the first MGC is low, the operator may decide to drop the remaining calls and may issue a command to shutdown the first MGC.

The second MGC is preferably a backup MGC for the first MGW. When the first MGW detects that the first MGC is not available (due to shutdown), control of the first portion of the trunk group is automatically passed from the first MGC to the second MGC. Thus, when the first MGW detects absence of its primary MGC (the first MGC), the first MGW will automatically switch to its secondary MGC resource (i.e. to the second MGC). E.g., absence of the first MGC is detected at the first MGW when the heart beat from the first MGC is lost.

When the control of the associated portion of the trunk group is passed from the first MGC to the second MGC, the second MGC maintains the full trunk group. Thus, the second media gateway control may setup new calls on the first portion of the trunk group after the control of this portion is transferred.

After maintenance of the first MGC (e.g. repair or upgrade), the trunks can be transferred back by using a similar method (but from the backup MGC, i.e. the second MGC, to the primary MGC, i.e. the first MGC).

Thus, after shutting down the first media gateway and maintenance of the first MGC, the first MGC may be started up and control of the first portion of the trunk group may be passed from the second MGC to the first MGC. For this purpose, the operator may issue a "wait traffic clear" command to the second MGC for the trunks to be switched back. When the remaining traffic on these trunks is low (typically after a while), the first MGW can be instructed to switch back from the secondary MGC (second MGC) to the primary MGC (first MGC).

As discussed above, both the first and second MGCs have the same destination address for signaling messages related to the shared trunk group, i.e. the MGCs support point code sharing. Thus, in case of using the SS7 signaling protocol, the first and the second MGC (forming an MGC cluster) support point code sharing, i.e. have the same SS7 destination point code. Therefore, the peering switch in the peering network does not have to differ between the first and second MGCs when sending an ISUP message. From a SS7 network perspective both MGCs look like a single instance.

It should be noted that basically the above mentioned embodiments of the invention can be arbitrarily combined. Furthermore, it should be noted that the disclosure of the invention also covers other claim combinations than the claim combinations which are explicitly given by the back references in the dependent claims, i.e., the claims can be basically combined in any order.

A second aspect of the invention relates to a telecommunication network. The above remarks related to the first aspect of the invention are basically also applicable to second aspect of the invention.

The telecommunication network comprises a first media gateway controller and a second media gateway controller. Moreover, the network comprises a first (physical or virtual) MGW connected to a peering switch of a first peering network via a first portion of a trunk group. Moreover, the network comprises a second (physical or virtual) MGW connected to the peering switch via a second portion of the trunk group. The control of the first portion of the trunk group is assigned to the first MGC and the control of the second portion of the trunk group is assigned to the second MGC.

Moreover, the first and second MGCs may have the same destination signaling point code, i.e. both MGCs look like a single instance from the signaling network perspective.

Both MGCs may be connected via a communication link, in particular for forwarding signaling information. In case both MGCs have the same point code, signaling information received at the first MGC and related to a particular trunk of the trunk group which is controlled by the second MGC may be forwarded from the first MGC via the communication link to the second MGC.

The network provides the advantage that the impact of planned or unplanned service outage is limited to just a portion of the trunks of a trunk group, e.g. to just half of the trunks of a trunk group. Thus, one MGC may be set out of service without effecting control of the whole trunk group. In particular, this allows shutting down an MGC without dropping all calls on the trunk group. Moreover, in case one MGC crash (or disaster), only 50 % of all trunks of the trunk group are affected.

In addition, the network allows passing control of the first trunk group to the second MGC in case of a shut-down of the first MGC as discussed before.

Preferably, control of a second trunk group from a second peering network or a part of the second group is assigned to the first MGC. Therefore, the first MGC may have a control relationship with trunks associated with both the first and the second peering networks. Without trunk group splitting, the first MGC would typically not have a connection to both peering networks and each trunk group would be under control of either the first or the second MGC. This would require a lot of communication between the MGCs in case of a call is originated in one MGC and terminated in the other.

When the first MGC controls trunks from both peering networks, the first MGC may use its own trunks when establishing a connection between both peering networks, i.e. a trunk from the first peering network and a trunk from the second peering network. The first MGC has to communicate with another MGC for establishing a connection between both peering networks only in case trunks to one of the networks are depleted (i.e. all trunks are booked). Therefore, the invention also allows reducing communication between MGCs, thereby reducing the hardware costs for communication.

The third aspect of the invention relates to the first MGC of the telecommunication network as discussed above. The above remarks related to the first and second aspects of the invention are basically also applicable to the third aspect of the invention.

The invention is explained below in an exemplary manner with reference to the accompanying drawings, wherein
- Fig. 1: illustrates a network structure used for carrying out the inventive method for shutting down an MGC; and
- Fig. 2: illustrates the principle of CIC routing.

When a major software upgrade or hardware replacement for an MGC is intended, the MGC has to be taken out of service for some time. For continuing the service of the associated trunks controlled by the MGC, a backup MGC has to be available. In case of geographical redundancy, such backup MGC is available. Typically, an MGW which was controlled by the primary MGC before automatically switches to a backup MGC (secondary MGC), when the MGW detects the absence of the primary MGC (e.g. by detecting loss of heart beat of the primary MGC). Unfortunately, in conventional configurations the calls on the trunk controlled by the primary MGC before are typically dropped by the secondary MGC. Some MGC implementations allow the transfer of stable calls by storing call related context in the MGW. The backup MGC reads out the call related context and rebuilds the calls on the backup MGC. This may take a lot of time. In addition, such approach bears the risk of taking over corrupted call contexts from the primary MGC.

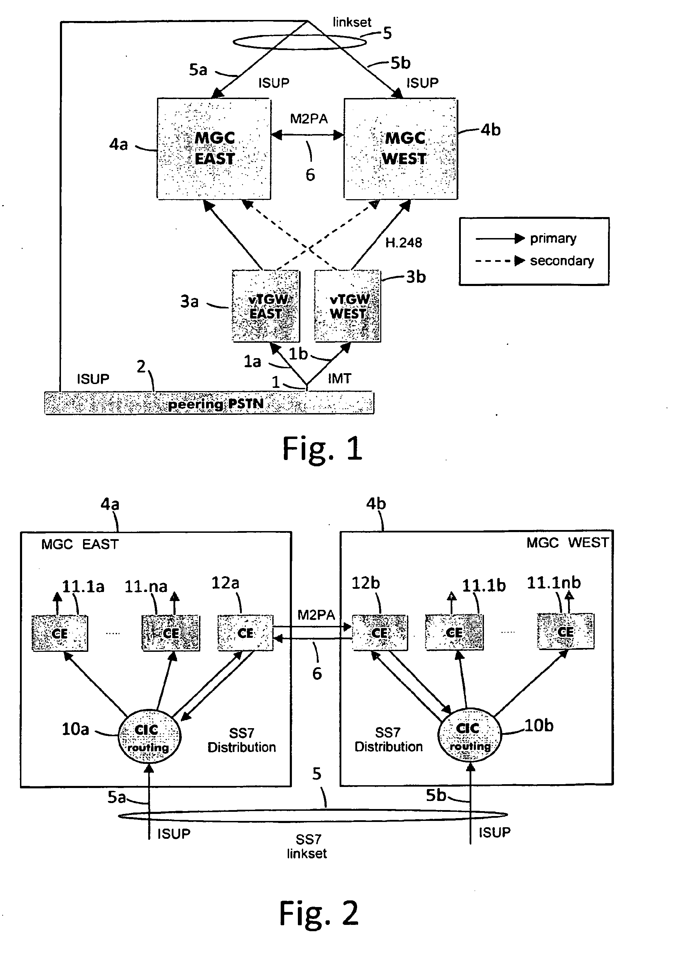

To overcome these problems, the basic idea of the invention is to split the control of a trunk group (i.e. a set of trunks to a peering switch with common signaling relationship). The control of one or more additional trunk groups may be split in the same way. A first portion of the trunk group is connected to a first MGW and controlled by a first MGC and a second portion of the trunk group is connected to a second MGW and controlled by a second MGC. Such network structure is illustrated in Fig. 1.

According to Fig. 1, a first portion 1a (e.g. the first half) of a split trunk group 1 from a switch (not shown) in a peering PSTN network 2 is connected to a first MGW 3a ("vTGW EAST"), wherein a second portion 1b (e.g. the second half) of the split trunk group 1 from the switch is connected to a second MGW 3b ("vTGW WEST"). In Fig. 1 the term "IMT" stands for "Inter-Machine Trunk". E.g., each portion 1a, 1b may correspond to a physical E1 or STM-1 link.

The portions 1a and 1b may be either distributed among multiple physical MGWs or virtual MGWs (vTGW). Virtual MGWs in a physical MGW are based on a logical separation of the gateway resource. In particular in case of small locations or when a physical link cannot be shared (e.g. all on one STM-1 interface), virtual MGW are beneficial. Thus, in case of small configurations (e.g. only one physical MGW in a location), a physical MGW may be split in two or more virtual MGWs (vTGW). The first 3a and second 3b MGW may be physical or virtual MGWs. Virtual MGWs are supported e.g. by the Alcatel-Lucent™ MGW 7510.

Preferably, the MGWs 3a and 3b are MGWs interfacing one or more PSTNs (in Fig. 1 only one PSTN is shown) to a NGN (the interface to the NGN is not shown), with the MGWs 3a and 3b preferably interfacing to a common NGN.

Each physical or virtual MGW 3a, 3b in Fig. 1 is assigned to a different MGC as primary control instance and to the respective other MGC as secondary control instance (backup control instance): MGW 3a is assigned to MGC 4a as primary control instance and MGW 3b is assigned to MGC 4b as primary control instance (see solid lines between the MGWs and the MGCs in Fig. 1). MGC 4a forms a secondary control instance for MGW 3b and MGC 4b forms a secondary control instance for MGW 3a (see dashed lines between the MGWs and the MGCs in Fig. 1). Thus, each MGC 3a, 3b controls a different portion (e.g. a different half) of the trunk group 1. The same may apply for one or more other trunk groups, e.g. one or more other trunk groups between the switch of the PSTN 2 and the MGWs 3a and 3b. The MGCs 4a and 4b may control additional MGWs not shown in Fig. 1.

Preferably, ITU-T H.248 is used as a control protocol between the MGWs and the MGCs.

The MGCs 4a and 4b receive SS7 signaling messages, in particular ISUP (ISDN user part) messages. The signaling messages are sent via a signaling linkset 5 to the MGCs 4a, 4b. The linkset 5 comprises a set of signaling links (in Fig. 1 two signaling links 5a and 5b) to the MGCs 4a, 4b. Both MGCs 4a, 4b have the same SS7 point code. Since the MGCs 4a, 4b have the same SS7 point code and ISUP messages are received in either of the two MGCs 4a, 4b, signaling information has to be forwarded to the respective other MGC 4a, 4b in case the forwarding MGCs is not responsible for the related trunk resource. Such forwarding of signal-ing information may be accomplished via a M2PA (MTP Level 2 Peer-to-Peer Adaptation Layer) link 6 between both MGCs 4a, 4b. Alternatively, a normal SS7 (e.g. 64 kbps) communication link may be used.

Preferably, the MGCs 4a and 4b form a geographical redundant MGC pair (MGC cluster).

In the following it is assumed that the first MGC 4a is intended for shutdown, however, the second MGC 4b can be shutdown in the same way. Whenever a shutdown of the first MGC 4a is required (e.g. due to a major software upgrade or a hardware modification or repair), the operator issues a "wait traffic clear" command to the first MGC 4a. This prevents the first MGC 4a from accepting new call setup requests. However, the first MGC 4a still processes requests related to already maintained calls. New call setup requests 4a are forwarded (preferably via the M2PA link 6) to the mate MGC 4b which can still accept calls for his portion 1b of trunk group resources. After some time, when the number of remaining calls on the first portion 1a of the trunk group is very low, the operator can issue a command to shutdown the first MGC 4a. When MGWs (which were controlled by the first MGC 4a beforehand) detect loss of communication with the first MGC 4a, these MGWs will automatically connects to the assigned secondary MGC. Thus, when the first MGW 3a detects loss of communication with the first MGC 4a, the first MGW 3 a automatically connects to the respective assigned secondary MGC 4b, thereby passing control of the first portion 1a of the trunk group to the secondary MGC 4b. The secondary MGC 4b accepts the transferred MGWs, i.e. MGW 3a in Fig. 1, and drops all remaining calls on these MGWs. Then, the MGC 4b immediately accepts new calls for the first portion 1a of the trunk group 1. This brings back the network to 100 % capacity of trunk resources.

After the repair or upgrade of the MGC 4a is finished (this could take days), preferably the operator likes to switch back control of the first portion 1a of the trunk group to the first MGC 4a. For switching control back, the operator issues a "wait traffic clear" command to the secondary MGC 4a for the trunks that are to be switched back. This prevents the second MGC 4a from accepting new call setup requests on the first portion 1a of the trunk group 1. When the remaining traffic on the first portion 1a of the trunk group 1 is again low, the MGW 3 a (and optionally also other not shown MGWs which are to be switched back to MGC 4a) can be instructed, e.g. by OAM (operations, administration, and maintenance) commands, to switch back from the secondary MGC 4b to the primary MGC 4a. If the MGW 3 a (and other not shown MGWs) connect to the primary MGC 4a, all remaining calls will be dropped and the MGW 3a will be booked with new call requests.

The inventive method allows zero service outage when shutting down an MGC: during the whole process as discussed above, the trunk group 1 is always available (although the portion 1a of the trunk group 1 is shortly not available for setting up new calls before the control of this portion 1a is transferred to the secondary MGC 4b).

Both MGCs 4a, 4b support point code sharing. Thus, from a SS7 network perspective, both MGCs 4a, 4b look like a single instance. Since the MGCs 4a, 4b have the same SS7 point code and ISUP messages are received in either of the two MGCs 4a, 4b, signaling information will be forwarded to the respective other MGC 4a, 4b in case the forwarding MGC is not responsible for the related trunk resource. Preferably, this is performed via so called "CIC routing" (CIC - circuit identification code).

Fig. 2 illustrates the interaction between the MGCs 4a, 4b and the concept of CIC routing. Figurative elements in Figs. 1 and 2 denoted by the same reference signs are the same. As shown in Fig 2, the MGCs 4a and 4b receive ISUP signaling messages via links 5a and 5b of the linkset 5. In MGC 4a a CIC routing element 10a is used for distributing received ISUP messages to control elements (CE) 11.1a - 11.na and 12a. The n control elements 11.1a - 11.na are used for controlling trunks, i.e. for controlling portion 1a in case the MGC 4a is in charge of this portion. As discussed before, the CIC identifies a particular trunk in a trunk group. Thus, in case MGC 4a is responsible for controlling a trunk as identified by the CIC in the ISUP message, CIC routing element 11a distributes the message to the responsible control element 11.1 a - 11.na. However, in case MGC 4a is not responsible for the trunk as identified by the CIC in the ISUP message, the message is forwarded via control element 12a and link 6 to the mate MGC 4b (which is responsible for the specific trunk resource of the trunk group 1). For the transfer of ISUP messages between the MGCs 4a and 4b, preferably M2PA is used. The second MGC 4b has the same or a similar structure for CIC routing, thus, the above applies also for MGC 4b. After receiving the signaling message in control element 12b of the second MGC 4b, the message is transferred to CIC routing element 10b which distributes the message to the responsible control element 11.1b - 11.nb.

The same principle applies when MGC 4b receives an ISUP message via link 5b: in case MGC 4b is not responsible for the trunk as identified by the CIC in the ISUP message, the message is forwarded via control element 12b and the bidirectional link 6 to the mate MGC 4a. Please note that the responsibility for a CIC depends on whether an MGW registers. When the MGC takes the control of the physical or virtual MGW, the CIC table is amended accordingly. The same happens in case the MGC looses control of the MGW. In this case the CIC routing table is amended again (in this case the ISUP message is forwarded).

Thus, CIC routing allows inter-MGC signaling and allows each MGC to switch the signaling traffic to the respective MGC which is in charge for a specific trunk resource identified by the CIC.

Moreover, in case an shutdown of an MGC is required (e.g. due to an upgrade), CIC routing helps to forward new call setup requests to the other MGC, when the "wait traffic clear" command is indicated. In this case, new call setup requests in the MGC are forwarded via the M2PA link 6 to the mate MGC in the same way as discussed above. E.g., in case MGC 4a is intended to shutdown and "a wait traffic clear" is indicated, new call setup requests received at MGC 4a are forwarded from control element 12a via M2PA link 6 to MGC 4b (in particular via control element 12b to CIC routing element 10b). After receiving a new call setup request at MGC 4b from MGC 4a, for setting up the call MGC 4b assigns one of the trunks for which MGC 4b is responsible (i.e. a trunk in the portion 1b of the trunk group 1).

As discussed before, the MGWs 3a, 3b may be virtual MGWs. In this case, the same scenario as described above applies.

The inventive method for shutting down an MGC (including any softswitch) allows a shutdown with very low or zero service impact. This is due to the fact that the shutdown only affects a portion of trunk group at all (e.g. the impact is only limited to half of the trunks) and even control of this portion is transferred to a backup MGC without dropping all calls (only the remaining calls after a particular time period are dropped). During the whole shutdown process typically trunks of the trunk group are available. Due to the low service impact, the economic consequences of a shutdown are reduced a lot for the operator. This allows the supplier to use that scenario for any kind of upgrades.

Without using said method for shutting down an MGC, a lot of effort has to be invested to keep the outage as low as possible (e.g. fast loading, fast initializing routines, strategies for hardware modification while the system is running, etc.). Therefore, the inventive concept for shutdown reduces the costs for complex upgrade and modification strategies and software.

Moreover, the upgrading can be done with a non-functional system reducing the risk. For instance, after upgrade or modifications, the MGC can be tested before it will be brought back into service. This reduces the risk of crashes and fallbacks. Even it is possible to start the modified MGC with some test traffic or a low portion of life traffic, before the whole load is transferred (as it would be on a traditional upgrade). Moreover, the support of zero outage allows saving costs of a test and reference exchange.

Although the inventive method prevents from call cuts, the inventive method does not require that call context are transferred, which reduces the data format dependencies. The inventive method can be generally supported by any MGW and does not require any further storage for context.

Besides shutting down an MGC with low service impact, the general inventive concept of trunk group splitting provides further advantages:
In case of an MGC crash (or disaster) only a portion of a trunk group is affected since the crashed MGC does not control the whole trunk group, e.g. only 50 % of each trunk group is affected. This leaves all communication means available while the network only suffers from a capacity shortage until all MGW resources are connected to the secondary MGC (typically, after some minutes).

Thus, the inventive concept of trunk group splitting limits the impact of planned (e.g. shut-down for maintenance) or unplanned (e.g. crash) outage of an MGC to just a portion of the trunks of a trunk group from a peering network, e.g. half of trunks. Thus, the peering network is not cut from service.

Please note that the invention would also work with a group of MGWs instead of a single MGW. E.g. one may have two groups of MGWs which are assigned to different MGCs. It would be also possible that single MGWs change the controller. In this case parts of the CIC tables are amended accordingly. In case of the outage of an MGC, all MGWs of the assigned group independently switch the controller. Thus, the mechanism would work without any dependencies or communication between the MGWs or the MGCs.

Moreover, trunk group splitting allows that an MGC can more often utilize its own trunks for terminating traffic without the need for bothering another MGC. Trunk group splitting allows that at least one or each of MGCs 4a, 4b in Fig. 1 have a relationship to two or more peering networks (in Fig. 1 only one peering network is shown). E.g., MGC 4a may be configured to control the portion 1a of the first trunk group 1 directed to the first peering network 2 and to control a portion of a second trunk group (not shown) directed to a second peering network (not shown). The second trunk group may be e.g. connected to MGW 3a or to a different MGW.

Without trunk group splitting, a peering network has typically a relationship either with MGC 4a or MGC 4b, however, not a relationship with both MGCs 4a, 4b. Trunk group splitting allows that a call is setup in a MGC preferentially with the "own" trunks (i.e. with the trunks controlled by the particular MGC). Communication (e.g. SIP traffic) with another MGC is only necessary if "own" trunks to the peering network are depleted (e.g. because all trunks are booked). This reduces a communication between the MGCs. Without trunk group splitting, communication between the MGCs will be always necessary if the call setup request cannot be served by an MGC because the outbound trunks are controlled by a different MGC.

This is illustrated in the following by means of an example:
In case a first peering network intends to setup a call to a second peering network, the first peering network sends an ISUP message e.g. to the first MGC 4a. However, trunk group splitting allows that the MGC 4a has also a control relationship with outbound trunks of a second trunk group directed to the second peering network (in addition to trunks of a first trunk group directed to the first peering network). Therefore, MGC 4b does not need to be involved, unless the trunks of MGC 4a to the second peering network are used to full capacity.

Without trunk group splitting, MGC 4a would typically control the trunks associated with the first peering network and MGC 4b would typically control the trunks associated with the second peering network. In this case setting up a call between both networks would be only possible if MGC 4a and MGC 4b communicate to each other for setting up the call. Thus, there is a lot of communication between the MGCs in case a call is originated in one MGC and terminated in the other. The inventive principle of trunk group splitting allows that MGC 4a can try to use its own trunks for terminating traffic before it has to ask the other MGC (e.g. because all trunks are booked).

## Claims

1. A method for shutting down a first media gateway controller (4a), hereafter called MGC, with reduced outage, comprising the steps of:
- connecting a first physical or virtual media gateway (3a), hereafter called MGW, to a switch of a first peering network having an originating signaling point code via a first portion (1a) of trunks of a trunk group (1):
- connecting a second physical or virtual MGW (3b) to the switch of the first peering network having the originating signaling point code via a second portion (1b) of trunks of the trunk group (1);
- assigning control of the first portion (1a) of trunks of the trunk group to the first MGC (4a), by assigning said first MGC (4a) as primary control Instance of said first physical or virtual MGW (3a) and by assigning a second MGC (4b) as secondary control instance of said first physical or virtual MGW (3a);
- assigning control of the second portion (1b) of trunks of the trunk group to the second MGC (4b), by assigning said second MGC (4b) as primary control instance of said second physical or virtual MGW (3b) and by assigning said first MGC (4a) as secondary control instance of said second physical or virtual MGW (3b);
- assigning a common destination signaling point code to the first MGC (4a) and the second MGC (4b), wherein the common destination signaling point code is used for signaling messages related to the trunk group (1);
- providing a communication link (6) between the first (4a) and the second (4b) MGC configured to forward signaling information received at the first (4a) or second (4b) MGC and related to a particular trunk of the trunk group (1) which is controlled by the respective other MGC (4a, 4b) to the respective other MGC (4a, 4b);
- shutting down the first MGC (4a); and
- passing the control of the first portion (1a) of trunks of the trunk group (1) from the first MGC (4a) to the second MGC (4b) by connecting the first MGW (3a) to its assigned secondary MGC (4b).

2. The method of claim 1, further comprising the step of:
- before shutting down, preventing to setup new calls on the first portion (1a) of trunks of the trunk group (1) controlled by the first MGC (4a).

3. The method of claim 2, wherein when preventing to setup new calls on the first portion (1a) of trunks of the trunk group (1), new requests to setup calls are forwarded from the first MGC (4a) to the second MGC (4b).

4. The method of claim 1, wherein
- the method comprises the further step of:
- subsequent to the shutting down step and prior to the step of passing the control, detecting at the first MGW (3a) that the first MGC (4a) is not available.

5. The method of claim 1, wherein after passing the control of the first portion (1a) of trunks of the trunk group (1) to the second MGC (4b), the second MGC (4b) sets up new calls on the first portion (1a) of trunks of the trunk group (1).

6. The method of claim 1, wherein the first portion (1a) of trunks of the trunk group (1) and the second portion (1b) of trunks of the trunk group (1) each have half of the capacity of the trunk group (1).

7. The method of claim 1, wherein the first MGC (4a) is subjected to maintenance after the first MGC (4a) is shut down.

8. The method of claim 1, further comprising the steps of:
- after the first MGC (4a) has been down for a time period, starting up the first MGC (4a); and
- passing the control of the first portion (1a) of trunks of the trunk group (1) or a part thereof from the second MGC (4b) to the first MGC (4a).

9. A system adapted to shut down a first media gateway controller (4a), hereafter called MGC, with reduced outage, comprising:
- means for connecting a first physical or virtual media gateway (3a), hereafter called MGW, to a switch of a first peering network having an originating signaling point code via a first portion (1a) of trunks of a trunk group (1);
- means for connecting a second physical or virtual MGW (3b) to the switch of the first peering network having the originating signaling point code via a second portion (1b) of trunks of the trunk group (1);
- means for assigning control of the first portion (1a) of trunks of the trunk group to the first MGC (4a), by assigning said first MGC (4a) as primary control instance of said first physical or virtual MGW (3a) and by assigning a second MGC (4b) as secondary control instance of said first physical or virtual MGW (3a);
- means for assigning control of the second portion (1b) of trunks of the trunk group to the second MGC (4b), by assigning said second MGC (4b) as primary control instance of said second physical or virtual MGW (3b) and by assigning said first MGC (4a) as secondary control instance of said second physical or virtual MGW (3b);
- means for assigning a common destination signaling point code to the first MGC (4a) and the second MGC (4b), wherein the common destination signaling point code is used for signaling messages related to the trunk group (1);
- means for providing a communication link (6) between the first (4a) and the second (4b) MGC configured to forward signaling information received at the first (4a) or second (4b) MGC and related to a particular trunk of the trunk group (1) which is controlled by the respective other MGC (4a, 4b) to the respective other MGC (4a, 4b);
- means for shutting down the first MGC (4a); and
- means for passing the control of the first portion (1a) of trunks of the trunk group (1) from the first MGC (4a) to the second MGC (4b) by connecting the first MGW (3a) to its assigned secondary MGC (4b).

10. The system of claim 9, wherein
control of a second trunk group from a second peering network or a part of the second trunk group is assigned to the first MGC (4a).

## Patentansprüche

1. Verfahren zum Abschalten einer Medlen-Gateway-Steuerung (4a), nachstehend MGC genannt, mit reduzierter Nichtverfügbarkeit, die folgenden Schritte umfassend:
- Verbinden eines ersten physischen oder virtuellen Medien-Gateways (3a), nachstehend MGW genannt, mit einem Schalter eines ersten Peering-Netzwerks mit einem Ursprungssignalisierungspunkt-Code über eine erste Menge (1a) von Verbindungsleitungen einer Verbindungsleitungsgruppe (1);
- Verbinden eines zweiten physischen oder virtuellen MGW (3b) mit dem Schalter des ersten Peering-Netzwerks mit dem Ursprungssignalisierungspunkt-Code über eine zweite Menge (1b) von Verbindungsleitungen der Verbindungsleitungsgruppe (1);
- Zuweisen der Steuerung der ersten Menge (1a) von Verbindungsleitungen der Verbindungsleitungsgruppe an die erste MGC (4a) durch Bestimmen der besagten ersten MGC (4a) als primäre Steuerinstanz des besagten ersten physischen oder virtuellen MGW (3a) und durch Bestimmen einer zweiten MGC (4b) als sekundäre Steuerinstanz des besagten ersten physischen oder virtuellen MGW (3a);
- Zuweisen der Steuerung der zweiten Menge (1b) von Verbindungsleitungen der Verbindungsleitungsgruppe an die zweite MGC (4b) durch Bestimmen der besagten zweiten (4b) als primäre Steuerinstanz des besagten zweiten physischen oder virtuellen MGW (3b) und durch Bestimmen der besagten ersten MGC (4a) als sekundäre Steuerinstanz des besagten zweiten physischen oder virtuellen MGW (3b);
- Zuweisen eines gemeinsamen Zielsignalisierungspunkt-Codes an die erste MGC (4a) und an die zweite MGC (4b), wobei der gemeinsame Zielsignalisierungspunkt-Code für Signallsierungsnachrichten, welche die Verbindungsleitungsgruppe (1) betreffen, verwendet wird;
- Bereitstellen einer Kommunikationsverbindung (6) zwischen der ersten (4a) und der zweiten (4b) MGC, die für das Weiterleiten von an der ersten (4a) oder der zweiten (4b) MGC empfangenen Signallsierungsinformationen, welche eine bestimmte Verbindungsleitung der Verbindungsleitungsgruppe (1) betreffen, und die von der Jewelligen anderen MGC (4a, 4b) gesteuert wird, an die jeweilige andere MGC (4a, 4b) konfiguriert ist;
- Abschalten der ersten MGC (4a); und
- Übergeben der Steuerung der ersten Menge (1a) von Verbindungsleitungen der Verbindungsieltungsgruppe (1) von der ersten MGC (4a) an die zweite MGC (4b) durch Verbinden des ersten MGW (3a) mit seiner zugewiesenen sekundären MGC (4b).

2. Verfahren nach Anspruch 1, weiterhin den folgenden Schritt umfassend:
- Vor dem Abschalten, Verhindern des Aufbaus neuer Rufverbindungen auf der ersten Menge (1a) von Verbindungsleitungen der Verbindungsleitungsgruppe (1), die von der ersten MGC (4a) gesteuert werden.

3. Verfahren nach Anspruch 2, wobei wenn der Aufbau neuer Rufverbindungen auf der ersten Menge (1a) von Verbindungsleitungen der Verbindungsleitungsgruppe (1) verhindert wird, neue Anforderungen für den Aufbau von Rufverbindungen von der ersten MGC (4a) an die zweite MGC (4b) weitergeleitet werden.

4. Verfahren nach Anspruch 1, wobei
- das Verfahren weiterhin den folgenden Schritt umfasst:
- Im Anschluss an den Schritt des Abschaltens und vor dem Schritt des Übergebens der Steuerung, Erkennen, an dem ersten MGW (3a), dass die erste MGC (4a) nicht verfügbar ist.

5. Verfahren nach Anspruch 1, wobei die zweite MGC (4b) nach der Übergabe der Steuerung der ersten Menge (1a) von Verbindungsleitungen der Verbindungsieitungsgruppe (1) an die zweite MGC (4b) neue Rufverbindungen auf der ersten Menge (1a) von Verbindungsleitungen der Verbindungsleitungsgruppe (1) aufbaut.

6. Verfahren nach Anspruch 1, wobei die erste Menge (1a) von Verbindungsleitungen der Verbindungsleitungsgruppe (1) und die zweite Menge (1b) von Verbindungsleitungen der Verbindungsleitungsgruppe (1) jeweils über die Hälfte der Kapazität der Verbindungsleitungsgruppe (1) verfügen.

7. Verfahren nach Anspruch 1, wobei die erste MGC (4a) nach Abschalten der ersten MGC (4a) einer Wartung unterzogen wird.

8. Verfahren nach Anspruch 1, weiterhin die folgenden Schritte umfassend:
- Nachdem die erste MGC (4a) für eine Zeitdauer abgeschaltet wurde, Starten der ersten MGC (4a); und
- Übergeben der Steuerung der ersten Menge (1a) von Verbindungsleltungen der Verbindungsleitungsgruppe (1) oder eines Teils davon von der zweiten MGC (4b) an die erste MGC (4a),

9. System, ausgelegt für das Abschalten einer ersten Medien-Gateway-Steuerung (4a), nachfolgend MGC genannt, mit reduzierter Nichtverfügbarkeit, umfassend:
- Mittel zum Verbinden eines ersten physischen oder virtuellen Medien-Gateways (3a), nachstehend MGW genannt, mit einem Schalter eines ersten Peering-Netzwerks mit einem Ursprungssignalisierungspunkt-Code über eine erste Menge (1a) von Verbindungsleitungen einer Verbindungsleitungsgruppe (1);
- Mittel zum Verbinden eines zweiten physischen oder virtuellen MGW (3b) mit dem Schalter des ersten Peering-Netzwerks mit dem Ursprungssignallsierungspunkt-Code über eine zweite Menge (1b) von Verbindungsleitungen der Verbindungsleitungsgruppe (1);
- Mittel zum Zuweisen der Steuerung der ersten Menge (1a) von Verbindungsleitungen der Verbindungsleitungsgruppe an die erste MGC (4a) durch Bestimmen der besagten ersten MGC (4a) als primäre Steuerinstanz des besagten ersten physischen oder virtuellen MGW (3a) und durch Bestimmen einer zweiten MGC (4b) als sekundäre Steuerinstanz des besagten ersten physischen oder virtuellen MGW (3a);
- Mittel zum Zuweisen der Steuerung der zweiten Menge (1b) von Verbindungsleitungen der Verbindungsleitungsgruppe an die zweite MGC (4b) durch Bestimmen der besagten zweiten (4b) als primäre Steuerinstanz des besagten zweiten physischen oder virtuellen MGW (3b) und durch Bestimmen der besagten ersten MGC (4a) als sekundäre Steuerinstanz des besagten zweiten physischen oder virtuellen MGW (3b);
- Mittel zum Zuweisen eines gemeinsamen Zielsignallsierungspunkt-Codes an die erste MGC (4a) und an die zweite MGC (4b), wobei der gemeinsame Zielsignalisierungspunkt-Code für Signallsierungsnachrichten, welche die Verbindungsleitungsgruppe (1) betreffen, verwendet wird;
- Mittel zum Bereitstellen einer Kommunikationsverbindung (6) zwischen der ersten (4a) und der zweiten (4b) MGC, die für das Weiterleiten von an der ersten (4a) oder der zweiten (4b) MGC empfangenen Signalisierungsinformationen, welche eine bestimmte Verbindungsleitung der Verbindungsleitungsgruppe (1) betreffen, und die von der jewelligen anderen MGC (4a, 4b) gesteuert wird, an die jewellige andere MGC (4a, 4b) konfiguriert ist;
- Mittel zum Abschalten der ersten MGC (4a); und
- Mittel zum Übergeben der Steuerung der ersten Menge (1a) von Verbindungsleitungen der Verbindungsleitungsgruppe (1) von der ersten MGC (4a) an die zweite MGC (4b) durch Verbinden des ersten MGW (3a) mit seiner zugewiesenen sekundären MGC (4b).

10. System nach Anspruch 9, wobei
die Steuerung einer zweiten Verbindungsleitungsgruppe von einem zweiten Peering-Netzwerk oder eines Teils der zweiten Verbindungsleitungsgruppe der ersten MGC (4a) zugewiesen wird.

## Revendications

1. Procédé pour arrêter un premier contrôleur de passerelle média (4a), ci-après appelé MGC, à pannes réduites, comprenant les étapes suivantes :
- connecter une première passerelle média physique ou virtuelle (3a), ci-après appelée MGW, à un commutateur d'un premier réseau poste à poste présentant un code de point de signalisation d'origine par l'intermédiaire d'une première partie (1a) de lignes d'interconnexion d'un groupe de lignes d'interconnexion (1) ;
- connecter une deuxième MGW physique ou virtuelle (3b) au commutateur du premier réseau poste à poste présentant le code de point de signalisation d'origine par l'Intermédiaire d'une deuxième partie (1b) de lignes d'interconnexion du groupe de lignes d'interconnexion (1) ;
- attribuer le contrôle de la première partie (1a) de lignes d'interconnexion du groupe de lignes d'interconnexion au premier MGC (4a), en attribuant ledit premier MGC (4a) en tant qu'instance de contrôle primaire de ladite première MGW physique ou virtuelle (3a) et en attribuant un deuxième MGC (4b) en tant qu'instance de contrôle secondaire de ladite première MGW physique ou virtuelle (3a) ;
- attribuer le contrôle de la deuxième partie (1b) de lignes d'interconnexion du groupe de lignes d'interconnexion au deuxième MGC (4b), en attribuant ledit deuxième MGC (4b) en tant qu'instance de contrôle primaire de ladite deuxième MGW physique ou virtuelle (3b) et en attribuant ledit premier MGC (4a) en tant qu'instance de contrôle secondaire de ladite deuxième MGW physique ou virtuelle (3b) ;
- attribuer un code de point de signalisation de destination commun au premier MGC (4a) et au deuxième MGC (4b), dans lequel le code de point de signalisation de destination commun est utilisé pour des messages de signalisation associés au groupe de lignes d'interconnexion (1) ;
- fournir une liaison de communication (6) entre le premier (4a) et le deuxième (4b) MGC configurée pour acheminer des informations de signalisation reçues au niveau du premier (4a) ou du deuxième (4b) MGC et associées à une ligne d'interconnexion particulière du groupe de lignes d'interconnexion (1) qui est contrôlée par l'autre MGC (4a, 4b) respectif vers l'autre MGC (4a, 4b) respectif ;
- arrêter le premier MGC (4a) ; et
- transférer le contrôle de la première partie (1a) de lignes d'interconnexion du groupe de lignes d'interconnexion (1) depuis le premier MGC (4a) vers le deuxième MGC (4b) en connectant la première MGW (3a) à son MGC secondaire (4b) attribué.

2. Procédé selon la revendication 1, comprenant en outre l'étape suivant
- avant l'arrêt, empêcher l'établissement de nouveaux appels sur la première partie (1a) de lignes d'interconnexion du groupe de lignes d'interconnexion (1) contrôlées par le premier MGC (4a).

3. Procédé selon la revendication 2, dans lequel lorsque l'on empêche l'établissement de nouveaux appels sur la première partie (1a) de lignes d'interconnexion du groupe de lignes d'interconnexion (1), de nouvelles demandes d'établissement d'appels sont acheminées depuis le premier MGC (4a) vers le deuxième MGC (4b).

4. Procédé selon la revendication 1, dans lequel
- le procédé comprend l'étape supplémentaire suivante :
- suite à l'étape d'arrêt et avant l'étape de transfert de contrôle, détecter au niveau de la première MGW (3a) que le premier MGC (4a) n'est pas disponible.

5. Procédé selon la revendication 1, dans lequel après le transfert de contrôle de la première partie (1a) de lignes d'interconnexion du groupe de lignes d'interconnexion (1) vers le deuxième MGC (4b), le deuxième MGC (4b) établit de nouveaux appels sur la première partie (1a) de lignes d'interconnexion du groupe de lignes d'interconnexion (1).

6. Procédé selon la revendication 1, dans lequel la première partie (1a) de lignes d'interconnexion du groupe de lignes d'interconnexion (1) et la deuxième partie (1b) de lignes d'interconnexion du groupe de lignes d'interconnexion (1) ont chacune la moitié de la capacité du groupe de lignes d'interconnexion (1).

7. Procédé selon la revendication 1, dans lequel le premier MGC (4a) est soumis à une maintenance après que le premier MGC (4a) a été arrêté.

8. Procédé selon la revendication 1, comprenant en outre les étapes suivantes :
- après que le premier MGC (4a) a été arrêté pendant une certaine période, démarrer le premier MGC (4a) ; et
- transférer le contrôle de la première partie (1a) de lignes d'interconnexion du groupe de lignes d'interconnexion (1) ou d'une partie de celui-ci depuis le deuxième MGC (4b) vers le premier MGC (4a).

9. Système adapté pour arrêter un premier contrôleur de passerelle média (4a), ci-après appelé MGC, à pannes réduites, comprenant :
- des moyens pour connecter une première passerelle média physique ou virtuelle (3a), ci-après appelée MGW, à un commutateur d'un premier réseau poste à poste présentant un code de point de signalisation d'origine par l'intermédiaire d'une première partie (1a) de lignes d'interconnexion d'un groupe de lignes d'interconnexion (1) ;
- des moyens pour connecter une deuxième MGW physique ou virtuelle (3b) au commutateur du premier réseau poste à poste présentant le code de point de signalisation d'origine par l'intermédiaire d'une deuxième partie (1b) de lignes d'interconnexion du groupe de lignes d'interconnexion (1) ;
- des moyens pour attribuer le contrôle de la première partie (1a) de lignes d'interconnexion du groupe de lignes d'interconnexion au premier MGC (4a), en attribuant ledit premier MGC (4a) en tant qu'instance de contrôle primaire de ladite première MGW physique ou virtuelle (3a) et en attribuant un deuxième MGC (4b) en tant qu'instance de contrôle secondaire de ladite première MGW physique ou virtuelle (3a) ;
- des moyens pour attribuer le contrôle de la deuxième partie (1b) de lignes d'interconnexion du groupe de lignes d'interconnexion au deuxième MGC (4b), en attribuant ledit deuxième MGC (4b) en tant qu'Instance de contrôle primaire de ladite deuxième MGW physique ou virtuelle (3b) et en attribuant ledit premier MGC (4a) en tant qu'instance de contrôle secondaire de ladite deuxième MGW physique ou virtuelle (3b) ;
- des moyens pour attribuer un code de point de signalisation de destination commun au premier MGC (4a) et au deuxième MGC (4b), dans lequel le code de point de signalisation de destination commun est utilisé pour des messages de signalisation associés au groupe de lignes d'interconnexion (1) ;
- des moyens pour fournir une liaison de communication (6) entre le premier (4a) et le deuxième (4b) MGC configurée pour acheminer des informations de signalisation reçues au niveau du premier (4a) ou du deuxième (4b) MGC et associées à une ligne d'interconnexion particulière du groupe de lignes d'interconnexion (1) qui est contrôlée par l'autre MGC (4a, 4b) respectif vers l'autre MGC (4a, 4b) respectif ;
- des moyens pour arrêter le premier MGC (4a) ; et
- des moyens pour transférer le contrôle de la première partie (1a) de lignes d'interconnexion du groupe de lignes d'interconnexion (1) depuis le premier MGC (4a) vers le deuxième MGC (4b) en connectant la première MGW (3a) à son MGC secondaire (4b) attribué.

10. Système selon la revendication 9, dans lequel :
le contrôle d'un deuxième groupe de lignes d'interconnexion à partir d'un deuxième réseau poste à poste ou d'une partie du deuxième groupe de lignes d'interconnexion est attribué au premier MGC (4a).
